# EUROPEAN PATENT SPECIFICATION

(11) **EP 4 064 004 B1**
(45) Date of publication and mention of the grant of the patent: **03.09.2025**
(21) Application number: 21188831.8
(22) Date of filing: 30.07.2021
(51) Int. Cl.: G06F 1/3231, G06F 1/16, G06F 1/3234, G06F 3/04883, G06F 3/03, G06F 1/3215

(54) **SCREEN WAKEUP METHOD, SCREEN WAKE-UP APPARATUS AND STORAGE MEDIUM**
BILDSCHIRMAUFWECKVERFAHREN, BILDSCHIRMAUFWECKVORRICHTUNG UND SPEICHERMEDIUM
PROCÉDÉ D'ACTIVATION D'ÉCRAN, APPAREIL D'ACTIVATION D'ÉCRAN ET SUPPORT DE STOCKAGE

(30) Priority: 23.03.2021 CN 202110308767
(43) Date of publication of application: 28.09.2022
(73) Proprietor: Beijing Xiaomi Mobile Software Co., Ltd., Beijing 100085 (CN)
(72) Inventor: JIA, Yongqiang, Beijing, 100085 (CN)
(74) Representative: dompatent von Kreisler Selting Werner - Partnerschaft von Patent- und Rechtsanwälten mbB

(56) References cited:
- EP-A1- 2 876 529
- EP-A1- 3 896 946
- WO-A1-2020/156269
- US-A1- 2019 339 804

## Description

### CROSS REFERENCE

This application is based upon and claims priority to Chinese Patent Application No. 202110308767.0, field on March 23, 2021.

### TECHNICAL FIELD

The present disclosure relates to the field of electronic technology, and in particular to a screen wake-up method, a screen wake-up apparatus and a storage medium.

### BACKGROUND

With the development of sciences and technologies, multi-screen terminals have become more and more popular due to their advantages in display functions. Taking a dual-screen mobile phone as an example, in addition to normal display of a main screen on the front side, the dual-screen mobile phone is also equipped with an auxiliary screen on the reverse side.

In related technologies, a screen of a terminal can be woken up by detecting operations such as tapping performed by the user on the screen of the terminal. The related technology can be applied to screen wake-up of a single-screen terminal. Related technologies are known from WO 2020/156269 A1.

### SUMMARY

The invention is defined by the independent claims. In order to overcome the problems in the related art, the present disclosure provides a screen wake-up method, a screen wake-up apparatus and a storage medium.

According to a first aspect of the embodiments of the present disclosure, there is provided a screen wake-up method according to claim 1.

In some embodiments of the present disclosure, after the first screen is woken up, the screen wake-up method further includes: in response to a running instruction not being detected within a first time threshold, adjusting the first screen to the non-wake-up state after the first time threshold is passed.

In some embodiments of the present disclosure, after the first screen is woken up, the screen wake-up method further includes: in response to performing a face recognition verification, turning on a camera on the same side as the first screen to perform a face recognition.

According to a second aspect of the embodiments of the present disclosure, there is provided a screen wake-up apparatus according to claim 4.

According to a third aspect, there is provided a computer-readable storage medium having computer programs stored thereon, and when the programs are executed by a processor, the steps in the screen wake-up device described in any one of the above embodiments in the first aspect are implemented.

The technical solution provided by the embodiments of the present disclosure may include the following beneficial effects: if it is determined that a screen wake-up operation is performed on the terminal, the screen designated by the user is determined and woken up among a plurality of different screens of the terminal. In addition, keep non-user-designated screens in a non-awake state. Through the present disclosure, a single screen of a multi-screen terminal can be woken up, and power consumption can be saved.

It should be understood that the above general description and the following detailed description are only exemplary and explanatory, and cannot limit the present disclosure.

### BRIEF DESCRIPTION OF THE DRAWINGS

The drawings herein are incorporated into the specification and constitute a part of the specification, show embodiments consistent with the disclosure, and together with the specification are used to explain the principle of the disclosure.
FIG. 1 is a flowchart showing a screen wake-up method according to an exemplary embodiment.
FIG. 2 is a flowchart showing a method for determining a first screen among multiple different screens of a terminal according to an exemplary embodiment.
FIG. 3 is a schematic diagram showing a scene of waking up a terminal screen according to an exemplary embodiment.
FIG. 4 is a schematic diagram showing a scene of waking up a terminal screen according to an exemplary embodiment.
FIG. 5 is a flowchart showing a method for determining a first screen among multiple different screens of a terminal according to an exemplary embodiment.
FIG. 6 is a schematic diagram showing a scene of waking up a terminal screen according to an exemplary embodiment.
FIG. 7 is a flowchart showing a method for adjusting the first screen to a non-awake state according to an exemplary embodiment.
FIG. 8 is a flowchart showing a method for a terminal to perform a face recognition verification according to an exemplary embodiment.
FIG. 9 is a block diagram showing a screen wake-up apparatus according to an exemplary embodiment.
FIG. 10 is a block diagram showing a device for screen wake-up according to an exemplary embodiment.

### DETAILED DESCRIPTION

The exemplary embodiments will be described in detail here, and examples thereof are shown in the accompanying drawings. When the following description refers to the accompanying drawings, unless otherwise indicated, the same numbers in different drawings represent the same or similar elements. The implementation manners described in the following exemplary embodiments do not represent all implementation manners consistent with the present disclosure. Rather, they are merely examples of apparatus and methods consistent with some aspects of the present disclosure as detailed in the appended claims.

The screen wake-up method provided by the embodiments of the present disclosure can be applied to a scene of waking up the terminal screen. Among them, the terminal may include dual-screen mobile terminals such as mobile phones, tablet computers, notebook computers, handheld computers, personal digital assistants (PDAs), portable media players (PMPs), navigation devices, wearable devices, smart bracelets and pedometers, and fixed terminals such as digital TVs and desktop computers.

In related technologies, the screen of the terminal can be determined and woken up by detecting related information of the terminal. For example, in a screen wake-up method, a touch operation performed by a user can be detected to determine that the terminal needs to perform a screen wake-up function, so as to wake up the screen of the terminal. For example, the user can wake up a screen of the terminal by "double-tapping" the screen. Wherein, the double-tapping operation includes, but is not limited to, the tapping operation of knuckles. In another screen wake-up method in the related art, by detecting a motion state of the terminal, it is determined that the terminal needs to perform the screen wake-up function, thereby waking up the screen of the terminal. For example, the user lifts a stationary terminal, and when the terminal determines using an acceleration sensor that the current motion state of the terminal satisfies a preset condition for waking up the screen, the screen of the terminal is woken up. Through the above screen woken-up method, the screen of the terminal can be waked up when the user intends to wake up the screen of the terminal, thereby improving a better user experience.

However, the related technology is usually applied to a single-screen terminal, and when it is applied to a multi-screen terminal, there will be a problem of lack of adaptation. For example, when the screen is woken up, all screens of the multi-screen terminal will be woken up, but the screen specified by the user among all the screens cannot be woken up alone. However, when all the screens of the multi-screen terminal are woken up, screens other than the screen intended to be used by the user will increase the electric energy consumption of the terminal, and the content of other screens may be exposed to other people's vision, which will also cause the privacy of the user to be compromised.

In view of this, the embodiments of the present disclosure provide a screen wake-up method, which determines and wakes up the screen designated by the user by detecting a screen wake-up operation performed by the user on the terminal and a operation area in which the screen wake-up operation is performed.

The screen wake-up method provided by the embodiments of the present disclosure can be applied to a terminal with multiple different screens. For ease of description, the screen designated by the user among the multiple different screens of the terminal is referred to as a first screen in the following.

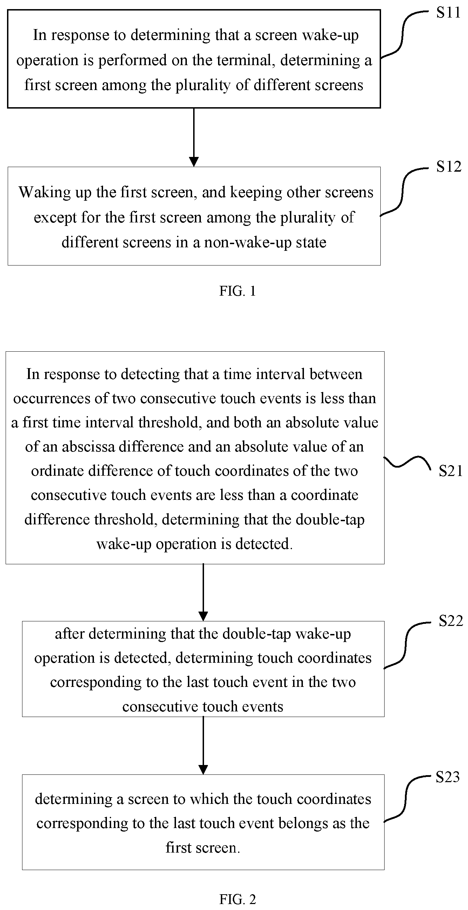

FIG. 1 is a flowchart showing a screen wake-up method according to an exemplary embodiment. As shown in FIG. 1, the screen wake-up method is applied in a terminal which includes a plurality of different screens, and includes the following steps.

In step S11, if it is determined that a screen wake-up operation is performed on the terminal by a user, a first screen is determined among the plurality of different screens.

In step S12, the first screen is woken up, and other screens except for the first screen among the plurality of different screens are kept in a non-wake-up state.

In the embodiments of the present disclosure, by detecting the screen wake-up operation performed by the user on the terminal, the first screen can be determined and woken up among the plurality of different screens of the terminal, and other screens except the first screen can be kept in the non-wake-up state. By using the present disclosure, the power consumption of the terminal can be reduced, and the risk of leakage of user privacy can be reduced, thereby improving a better user experience.

For a terminal including a main screen on the front side (which is also called as a front main screen) and an auxiliary screen on the reverse side (which is also called as a reverse auxiliary screen), when the front main screen (i.e., the first screen) of the terminal is woken up, the reverse auxiliary screen of the terminal is kept in the non-wake-up state. When the reverse auxiliary screen (i.e., the first screen) of the terminal is woken up, the front main screen of the terminal is kept in a non-wake-up state.

In the screen wake-up method of the embodiment of the present disclosure, after the double-tap wake-up operation is detected, it is determined that the user has performed the screen wake-up operation on the terminal.

After the double-tap wake-up operation is detected, a light sensor is used to detect intensity of ambient light of the environment where the terminal is located, so as to determine whether the currently detected double-tap wake-up operation is a false trigger. In an example, the detected intensity of the ambient light can be compared with a preset ambient light intensity threshold. If it is determined that the detected intensity of the ambient light is greater than or equal to the ambient light intensity threshold (for example, the detected intensity of the ambient light is greater than or equal to 0), it is determined that the detected back tapping operation is not falsely triggered, and furthermore, it is determined that the user has performed a screen wake-up operation on the terminal. If it is determined that the detected intensity of the ambient light is less than the ambient light intensity threshold (for example, the detected intensity of the ambient light is less than 0), it is determined that the detected back tapping operation is a false trigger, and no more operation is performed. By using the present disclosure, power loss caused by false triggering can be prevented.

In the embodiments of the present disclosure, after a touch event triggered by a user on the terminal is detected, and the touch event meets a preset condition, it can be determined that the user has performed a double-tap to wake up the terminal. For example, it may be detected that a time interval between occurrences of two consecutive touch events is less than a first time interval threshold, and both an absolute value of an abscissa difference and an absolute value of an ordinate difference of touch coordinates of the two consecutive touch events are less than a coordinate difference threshold, it is determined that a double-tap wake-up operation is detected.

In an example, if it is determined that the user has performed a double-tapping operation to wake up the terminal, the first screen is determined among multiple different screens by using related parameters of triggering the touch events. For example, it may be detecting the touch coordinates corresponding to the touch events (for example, the touch coordinates corresponding to the last touch event), and determining a screen to which the touch coordinates belong is the first screen.

FIG. 2 is a flowchart showing a method for determining a first screen in a plurality of different screens of a terminal according to an exemplary embodiment. As shown in FIG. 2, the method includes the following steps.

In step S21, if it is detected that a time interval between occurring two consecutive touch events is less than a first time interval threshold, and both an absolute value of an abscissa difference and an absolute value of an ordinate difference of touch coordinates of the two consecutive touch events are less than a coordinate difference threshold, it is determined that a double-tap wake-up operation is detected.

In step S22, if it is determined that a double-tap wake up operation is detected, touch coordinates corresponding to the last touch event in two consecutive touch events are determined.

In step S23, a screen to which the touch coordinates corresponding to the last touch event belong is determined as the first screen.

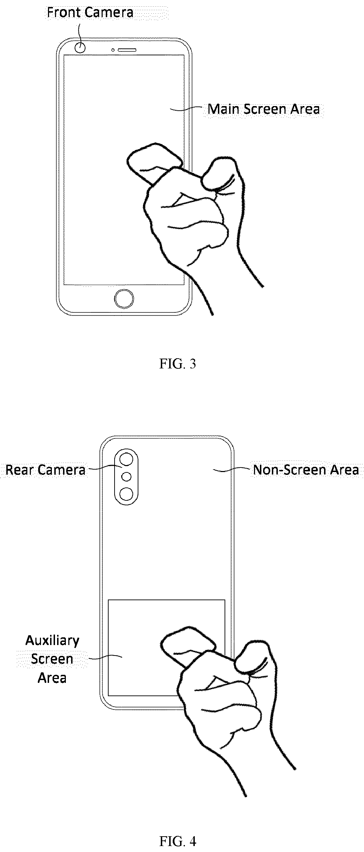

In an example, as shown in FIGS. 3 and 4, for a terminal equipped with a front main screen and a reverse auxiliary screen, the user can perform a touch operation on a main screen area of the front main screen and/or an auxiliary screen area of the reverse auxiliary screen, thereby triggering a touch event. When the user triggers touch events on the terminal for successive two times, the terminal can detect the touch events triggered by the user. When it is detected that the time interval between the occurrences of two consecutive touch events is less than a second time interval threshold (for example, 1 second), and both the absolute value of the abscissa difference and the absolute value of the ordinate difference of the touch coordinates of the two consecutive touch events are less than the coordinate difference threshold (for example, the absolute value of the coordinate difference is less than 20 pixels), it is determined that the user has performed a double-tap wake up operation on the terminal.

In the screen wake-up method provided by the embodiments of the present disclosure, by detecting touch events triggered by the user, it can be determined that the user has performed a screen wake-up operation on the terminal, so as to wake up the user-designated screen among multiple different screens of the terminal.

In the embodiment of the present disclosure, if it is detected that the user performs a back tapping operation on the terminal, it is determined that the user has performed a double-tap wake-up operation on the terminal. When two consecutive back tapping operations are detected, and the time interval between the occurrences of the two consecutive back tapping operations is less than the second time interval threshold, it is determined that the double-tap wake-up operation is detected.

In an example, if it is determined that the user has performed the double-tap wake-up operation, an acceleration sensor and an optional face recognition component are used to determine a screen that the user faces, and the screen that the user faces is determined as the first screen.

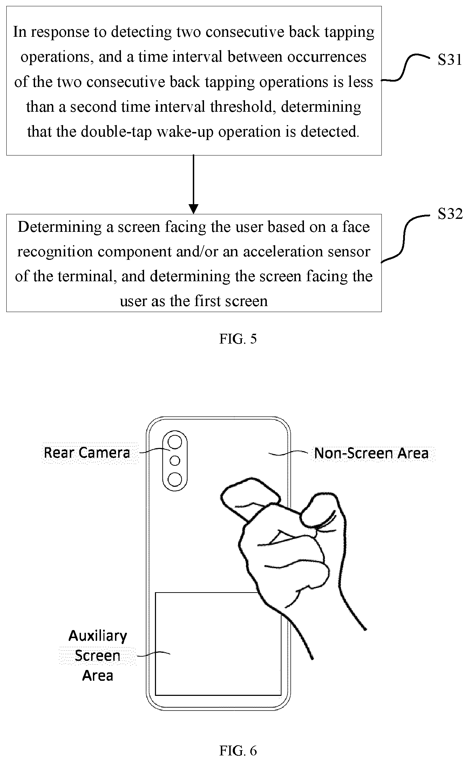

FIG. 5 is a flowchart showing a method for determining a first screen among a multiple different screens of a terminal according to an exemplary embodiment. As shown in FIG. 5, the method includes the following steps.

In step S31, in response to detecting two consecutive back tapping operations on the terminal, and if the time interval between occurrences of the two consecutive back tapping operations is less than the second time interval threshold, it is determined that the double-tap wake-up operation is detected.

In step S32, the screen facing the user is determined based on an acceleration sensor and an optional face recognition component of the terminal, and the screen facing the user is determined as the first screen.

Wherein, the screen that the user faces includes a screen where the acceleration direction generated by the back tapping operation detected by the acceleration sensor is opposite.

In one embodiment, as shown in FIG. 6, for a terminal having a main screen installed on the front side and an auxiliary screen installed on the reverse side, the user can perform a back tapping operation in a non-screen area on the auxiliary screen of the reverse side (that is, tapping the non-screen area on the auxiliary screen of the reverse side). When the user triggers the back tapping operations for successive two times in the non-screen area of the auxiliary screen on the reverse side of the terminal, the terminal can detect the back tapping operations performed by the user by a sensing device such as an acceleration sensor. When it is detected that the time interval between occurrences of two consecutive back tapping operations is less than the second time interval threshold (for example, 1 second), it is determined that the user has performed a double-tap wake-up operation on the terminal.

In the embodiment of the present disclosure, after detecting that the user triggers the double-tap wake-up operation by the back tapping operations, the screen that the user is watching is determined according to the acceleration sensor and the screen that the user is watching is determined as the first screen.

In one example, after detecting that the user triggers a double-tap wake-up operation through the back tapping operations, face recognition can be performed by using the face recognition component of the terminal. After facial data of the user is detected, the screen where the face recognition component obtaining the facial data of the user is located is determined as the first screen. For example, as shown in FIGS.3 and 4, for a terminal with a front main screen and a reverse auxiliary screen, after detecting that the user triggers the double-tap wake-up operation through the back tapping operations, a front camera and a rear camera of the terminal are used to collect the facial data of the user. When the user's facial data is obtained through the front camera of the terminal, it is determined that the user is watching the front main screen where the front camera is located. Furthermore, the front main screen of the terminal is determined as the first screen. When the user's facial data is obtained through the rear camera of the terminal, it is determined that the user is watching the reverse auxiliary screen where the rear camera is located. Furthermore, the reverse auxiliary screen of the terminal is determined as the first screen.

After detecting that the user triggers the double-tap wake-up operation through the back tapping operations, the acceleration generated by the back tapping operation is detected by the acceleration sensor of the terminal, and the screen opposite to an acceleration direction is determined as the first screen. For example, if the screen opposite to the acceleration direction is the front main screen of the terminal, it is determined that the user is watching the front main screen of the terminal. Furthermore, the front main screen of the terminal is determined as the first screen.

If a back tapping operation is detected, the ambient light of the environment where the terminal is located is detected by the light sensor, and whether the back tapping operation is a false trigger is determined based on the detection result of the ambient light. For example, the detected intensity of the ambient light can be compared with the ambient light intensity threshold. If it is determined that the detected intensity is less than the ambient light intensity threshold (for example, the detected intensity of the ambient light is less than 0), it is determined that the detected back tapping operation is a false trigger, and no operation is performed. If it is determined that the detected intensity is greater than or equal to the ambient light intensity threshold (for example, the detected intensity of the ambient light is greater than or equal to 0), it is determined that the detected back tapping operation is not falsely triggered, and furthermore, it is determined that the user has performed a screen wake-up operation on the terminal. In an embodiment, after the first screen is determined and it is determined that the detected back tapping operation is not falsely triggered, the first screen may be woken up.

In the screen wake-up method provided by the embodiments of the present disclosure, it is possible to determine that the user has performed a screen wake-up operation on the terminal by detecting the user's back tapping operation on the terminal, so as to wake up the user- designated screen among multiple different screens of the terminal.

In the embodiment of the present disclosure, an interface displayed after waking up the first screen may be a lock screen interface of the terminal or an application desktop of the terminal. In an example, if the interface displayed after waking up the terminal is the lock screen interface of the terminal, the user can view the display content of the lock screen interface of the terminal by waking up the first screen. Among them, the displayed content can be content such as time, weather, and chat information. Of course, it can also be a static image, a dynamic image, and/or a video image set by the user. In another example, if the interface displayed after waking up the screen is the application desktop of the terminal, the user can perform operations such as opening an application on the application desktop of the terminal.

In the embodiment of the present disclosure, after the first screen is woken up, the first screen can be adjusted to a non-wake-up state in the case of no further operation performed by the user.

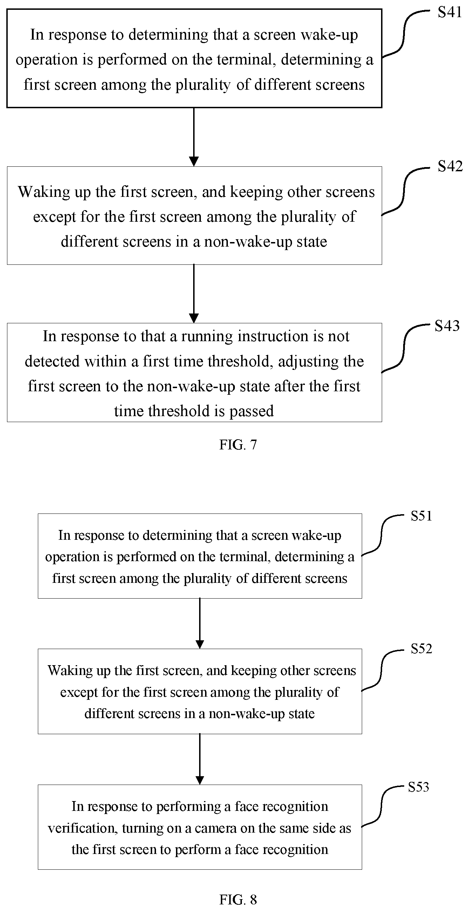

FIG. 7 is a flowchart showing a method for adjusting the first screen to a non-awake state according to an exemplary embodiment. As shown in FIG. 7, steps S41 and S42 in the screen wake-up method provided in FIG. 7 are similar to steps S 11 and S 12 in the method shown in FIG. 1, and will not be repeated here.

In step S43, if a running instruction is not detected within a first time threshold, the first screen is adjusted to the non-awake state after the first time threshold is passed.

In an example, the terminal is preset with the first time threshold (for example, 3 seconds) for detecting the running instruction, and if the running instruction is not detected within the first time threshold, the first screen is adjusted to the non-awake state. Through the execution of this example in the present disclosure, the power of the terminal can be further saved.

In the embodiment of the present disclosure, if the terminal has a face recognition function or is equipped with a face recognition function, after waking up the first screen, the face recognition authentication can be performed, and the camera on the same side as the first screen can be turned on for the face recognition.

FIG. 8 is a flowchart showing a method for a terminal to perform a face recognition verification according to an exemplary embodiment. As shown in FIG. 8, steps S51 and S52 in the screen wake-up method provided in FIG. 8 are similar to steps S11 and S12 in the method shown in FIG. 1, and will not be repeated here.

In step S53, in response to performing the face recognition verification, the camera on the same side as the first screen is turned on to perform face recognition.

In an example, as shown in FIG. 3, if the first screen being woken up is the main screen of the terminal on the front side of the terminal, when the terminal performs the face recognition verification, the front camera of the terminal can be turned on to obtain current facial data of the user and perform face recognition. In another example, as shown in FIG. 4, if the first screen woken up is the auxiliary screen on the reverse side of the terminal, when the terminal performs the face recognition verification, the rear camera of the terminal can be turned on to obtain current facial data of the user and perform face recognition. In the embodiments of the present disclosure, when the terminal performs the face recognition verification, the camera on the same side as the wake-up screen can be turned on, so that the user can perform the face recognition verification more conveniently.

In the embodiments of the present disclosure, after detecting that the user performs a screen wake-up operation, a screen designated by the user can be determined and woken up among multiple different screens of the terminal according to the screen wake-up operation performed by the user. At the same time, non-user-designated screens are kept in the non-woken-up state. If the screen wake-up operation is determined by detecting the touch events, the touch coordinates that triggered the last touch event can be determined, and the screen to which the touch coordinates belong is determined as the first screen. If the screen wake-up operation is determined by detecting the back tapping operation, a screen facing the user can be determined by the acceleration sensor and/or the face recognition component, and the screen facing the user can be determined as the first screen. After waking up the first screen, the camera on the same side as the first screen can be called to perform the face recognition, and the first screen can be adjusted to the non-wake-up state after the running instruction is not detected within a preset time. The screen wake-up method provided by the present disclosure can wake up a screen designated by a user and turn on the camera on the side of the wake-up screen for the face recognition. In addition, the wake-up screen can be controlled to turn off the screen when the screen is woken up and the user has no further operation, thereby improving the user experience.

In an example, as shown in FIG. 3 and FIG. 4, for a terminal including a front main screen and a reverse auxiliary screen. When all screens of the terminal are in the non-wake-up state, the terminal can monitor the back tapping operation performed by the user and the touch event triggered by the user. For example, when the trigger time interval of two consecutive touch events is less than 1 second, and the absolute value of the abscissa difference and the absolute value of the ordinate difference of the trigger coordinates corresponding to the two touch events are both less than 20 pixels, it is determined that the user has performed a double-tap wake-up operation on the terminal. Thereafter, the screen to which the trigger coordinates corresponding to the last touch event triggered belong can be determined. If the coordinates are located in the main screen area of the front main screen, the front main screen is woken up. If the terminal is equipped with a face unlock function, the front camera is turned on for the face recognition authentication. If the terminal is not equipped with the face unlock function, only the front main screen will be woken up without any other operation. If there is no further operation after the user wakes up the front main screen, and the non-operation time reaches 3 seconds, the front main screen is controlled to be turned off (i.e., be adjusted to the non-wake-up state). If the coordinates are located in the auxiliary screen area of the reverse auxiliary screen, the reverse auxiliary screen will be woken up. If the terminal is equipped with a face unlock function, the rear camera is turned on for face recognition authentication. If the terminal is not equipped with the face unlock function, only the reverse auxiliary screen will be woken up and no other operation is performed. If there is no further operation after the user wakes up the reverse auxiliary screen, and the non-operation time reaches 3 seconds, the reverse auxiliary screen is controlled to be turned off (i.e., be adjusted to the non-wake-up state). For another example, when the trigger time interval of two consecutive back tapping operations is less than 1 second, it is determined that the user has performed a double-tap wake-up operation on the terminal. Since the accuracy of the mechanism detecting the back tapping operation is low, false taps may occur in scenes such as the user walking. Therefore, in general, it is necessary to further collect ambient light intensity by using the light sensor. If it is determined that the ambient light intensity is 0, it is determined that the back tapping operation is a false trigger, and the terminal is controlled to not perform any operation. If it is determined that the ambient light intensity is not 0, the acceleration sensor and/or the face recognition component (such as a low-power camera) is used to determine the screen that the user is facing. If it is determined that the screen that the user is facing is the front main screen, the front main screen is woken up. If the terminal is equipped with a face unlock function, the front camera is turned on to perform face recognition verification. Otherwise, if the terminal is not equipped with the face unlock function, only the front main screen is woken up and no any other operation is performed. If there is no further operation after the user wakes up the front main screen, and the non-operation time reaches 3 seconds, the front main screen is controlled to be turned off (i.e., be adjusted to the non-wake-up state). If it is determined that the screen that the user is facing is the reverse auxiliary screen, the reverse auxiliary screen is woken up. If the terminal is equipped with a face unlock function, the rear camera is turned on for the face recognition authentication. If the terminal is not equipped with a face unlock function, only the reverse auxiliary screen is woken up and no other operation is performed. If there is no further operation after the user wakes up the reverse auxiliary screen, and the non-operation time reaches 3 seconds, the reverse auxiliary screen is controlled to be turned off (i.e., be adjusted to a non-wake-up state).

The screen wake-up method provided by the embodiments of the present disclosure can determine and wake up a user-designated screen among multiple different screens of the terminal.

Based on the same concept, embodiments of the present disclosure also provide a screen wake-up apparatus.

It can be understood that, in order to realize the above-mentioned functions, the screen wake-up apparatus provided in the embodiments of the present disclosure includes hardware structures and/or software modules corresponding to each function. In combination with the units and algorithm steps of the examples disclosed in the embodiments of the present disclosure, the embodiments of the present disclosure can be implemented in the form of hardware or a combination of hardware and computer software. Whether a certain function is executed by hardware or computer software-driven hardware depends on the specific application and design constraint conditions of the technical solution. Those skilled in the art can use different methods for each specific application to implement the described functions, but such implementation should not be considered as going beyond the scope of the technical solutions of the embodiments of the present disclosure.

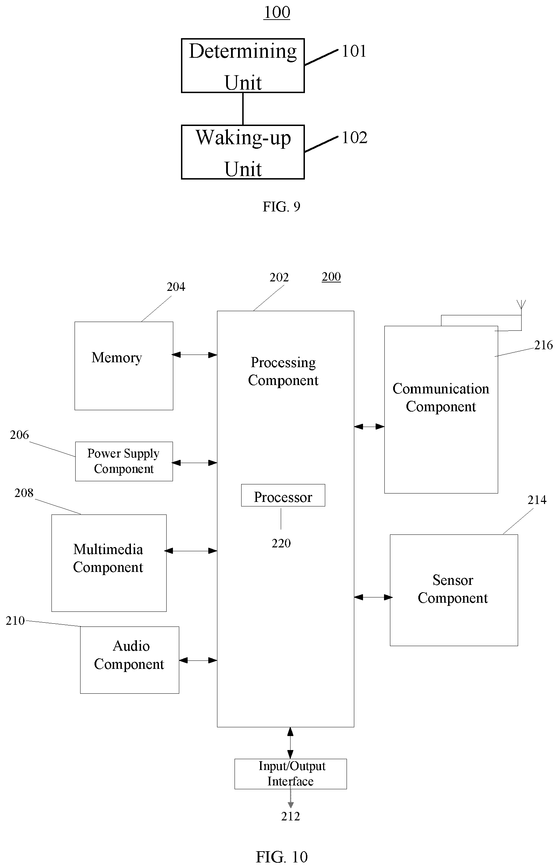

FIG. 9 is a block diagram showing a screen wake-up apparatus according to an exemplary embodiment. Referring to FIG. 9, the apparatus 100 includes a determining unit 101 and a waking-up unit 102.

The determining unit 101 is configured to determine a first screen among the plurality of different screens, in the case that a user has performed a screen wake-up operation on the terminal. The waking-up unit 102 is configured to wake up the first screen, and keep other screens except for the first screen among the plurality of different screens in a non-wake-up state.

In some embodiments, the determining unit 101 is configured to determine that the screen wake-up operation is performed on the terminal in following manner: in response to detecting a double-tap wake-up operation, determining that the user has performed the screen wake-up operation on the terminal.

In some embodiments, the determining unit 101 is configured to detect a double-tap wake-up operation in following manner: in response to detecting that a time interval between occurrences of two consecutive touch events is less than a first time interval threshold, and both the absolute value of an abscissa difference and the absolute value of an ordinate difference of touch coordinates of the two consecutive touch events are less than a coordinate difference threshold, determining that the double-tap wake-up operation is detected.

In some embodiments, the determining unit 101 is configured to determine the first screen among the plurality of different screens in following manner: determining touch coordinates corresponding to the last touch event in the two consecutive touch events; and determining the screen to which the touch coordinates corresponding to the last touch event belongs as the first screen.

In some embodiments, the determining unit 101 is configured to detect the double-tap wake-up operation in following manner: in response to detecting two consecutive back tapping operations, and a time interval between occurrences of the two consecutive back tapping operations is less than a second time interval threshold, determining that the double-tap wake-up operation is detected.

In some embodiments, the determining unit 101 is configured to determine the first screen among the plurality of different screens in following manner: determining the screen facing the user based on a face recognition component and/or an acceleration sensor of the terminal, and determining the screen facing the user as the first screen. Wherein, the screen facing the user comprises a screen where the face recognition component is located, and/or a screen where an acceleration direction generated by the back tapping operations detected by the acceleration sensor is opposite.

In some embodiments, the determining unit 101 further comprises a light sensor, and the determining unit 101 is configured to, in response to detecting the double-tap wake-up operation, determine that the screen wake-up operation is performed on the terminal in following manner: in response to detecting the double-tap wake-up operation, determining whether ambient light intensity detected by the light sensor is greater than or equal to an ambient light intensity threshold. When the ambient light intensity detected by the light sensor is greater than or equal to the ambient light intensity threshold, it is determined that the screen wake-up operation is performed on the terminal.

In some embodiments, the waking-up unit 102 is further configured to: after the first screen is woken up, in response to that a running instruction is not detected within the first time threshold, adjust the first screen to the non-wake-up state after the first time threshold is passed.

In some embodiments, the waking-up unit 102 is further configured to: after the first screen is woken up, in response to performing a face recognition verification, turn on a camera on the same side as the first screen to perform a face recognition.

Regarding the apparatus in the foregoing embodiment, the specific manner in which each module performs operation has been described in detail in the embodiment of the method, and detailed description will not be given here.

An embodiment of the present disclosure also proposes an electronic equipment, the electronic equipment includes:
a processor; and
a memory for storing instructions executable by the processor;
wherein the processor is configured to perform the steps in the screen wake-up method according to any one of the foregoing embodiments.

An embodiment of the present disclosure also proposes a computer-readable storage medium having computer instructions stored thereon, when the instructions are executed by a processor, screen wake-up method according to any one of the foregoing embodiments is implemented.

FIG. 10 is a block diagram showing a device for waking up a screen according to an exemplary embodiment. For example, the device 2100 may be a mobile phone, a computer, a digital broadcasting terminal, a message transceiving device, a game console, a tablet device, medical equipment, fitness equipment, a personal digital assistant, etc.

Referring to FIG. 10, the device 200 may include one or more of the following components: a processing component 202, a memory 204, a power supply component 206, a multimedia component 208, an audio component 210, an input/output (I/O) interface 212, a sensor component 214, and a communication component 216

The processing component 202 generally controls the overall operations of the device 200, such as operations associated with displaying, telephone calls, data communication, camera operations, and recording operations. The processing component 202 may include one or more processors 220 to execute instructions to complete all or part of the steps in the above method. In addition, the processing component 202 may include one or more modules to facilitate interaction between the processing component 202 and other components. For example, the processing component 202 may include a multimedia module to facilitate interaction between the multimedia component 208 and the processing component 202.

The memory 204 is configured to store various types of data to support operations at the device 200. Examples of these data include instructions for any application or method operating on the device 200, contact data, phone book data, messages, pictures, videos, etc. The memory 204 may be implemented by any type of volatile or non-volatile storage device or a combination thereof, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power supply component 206 provides power to various components of the device 200. The power supply component 206 may include a power supply management system, one or more power supplies, and other components associated with generating, managing, and distributing power for the device 200.

The multimedia component 208 includes a screen that provides an output interface between the device 200 and the user. In some embodiments, the screen may include a liquid crystal display (LCD) and a touch panel (TP). If the screen includes a touch panel, then that screen may be implemented as a touch screen to receive input signals from the user. The touch panel includes one or more touch sensors, to sense touching, swiping, and gestures on the touch panel. The touch sensor may not only sense the boundary of the touching operation or swiping operation, but also detect the duration and pressure related to the touching operation or swiping operation. In some embodiments, the multimedia component 208 includes a front camera and/or a rear camera. When the device 200 is in an operation mode, such as a shooting mode or a video mode, the front camera and/or the rear camera may receive external multimedia data. Each of the front camera and rear camera may be a fixed optical lens system or have focal length and optical zoom capabilities.

The audio component 210 is configured to output and/or input audio signals. For example, the audio component 210 includes a microphone (MIC). When the device 200 is in an operation mode, such as a call mode, a recording mode, or a voice recognition mode, the microphone is configured to receive an external audio signal. The received audio signal may be further stored in the memory 204 or transmitted via the communication component 216. In some embodiments, the audio component 210 further includes a speaker for outputting audio signals.

The I/O interface 212 provides an interface between the processing component 202 and a peripheral interface module. The peripheral interface module may be a keyboard, a click wheel, a button, etc. These buttons may include, but are not limited to: home button, volume button, start button, and lock button.

The sensor assembly 214 includes one or more sensors for providing the status assessment of various aspects for the device 200. For example, the sensor component 214 can detect the on/off state of the device 200, and the relative positioning of the components, for example, the component is a display and a keypad of the device 200, and the sensor component 214 can also detect the position change of the device 200 or a component of the device 2100, the presence or absence of user contact with the device 200, the orientation or acceleration/deceleration of the device 200, and the temperature change of the device 200. The sensor assembly 214 may include a proximity sensor configured to detect the presence of nearby objects without any physical contact. The sensor assembly 214 may also include a light sensor, such as a CMOS or CCD image sensor, for use in imaging applications. In some embodiments, the sensor assembly 214 may also include an acceleration sensor, a gyro sensor, a magnetic sensor, a pressure sensor, or a temperature sensor.

The communication component 216 is configured to facilitate wired or wireless communication between the device 200 and other devices. The device 200 can access a wireless network based on a communication standard, such as WiFi, 2G, or 3G, or a combination thereof. In an exemplary embodiment, the communication component 216 receives a broadcast signal or broadcast related information from an external broadcast management system via a broadcast channel. In an exemplary embodiment, the communication component 216 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 200 may be implemented by one or more application specific integrated circuits (ASICs), digital signal processors (DSPs), digital signal processing devices (DSPDs), programmable logic devices (PLDs), Field programmable gate array (FPGA), controller, microcontroller, microprocessor or other electronic components, to execute the receiving method described in any of the above embodiments.

In an exemplary embodiment, there is also provided a non-transitory computer-readable storage medium including instructions, such as a memory 204 including instructions, which can be executed by the processor 220 of the apparatus 200 to complete the above method. For example, the non-transitory computer-readable storage medium may be ROM, random access memory (RAM), CD-ROM, magnetic tape, floppy disk, optical data storage device, or the like.

It can be understood that in the present disclosure, "a plurality of" or "multiple" refer to two or more than two, and other quantifiers are similar. "And/or" describes the association relationship of the associated object, indicating that there can be three types of relationships, for example, A and/or B, which can mean: A alone exists, A and B exist at the same time, and B exists alone. The character "/" generally indicates that the associated objects before and after are in an "or" relationship. The singular forms "a", "said" and "the" are also intended to include plural forms, unless the context clearly indicates other meanings.

It can be further understood that the terms "first", "second", etc. are used to describe various information, but the information should not be limited to these terms. These terms are only used to distinguish the same type of information from each other, and do not indicate a specific order or degree of importance. In fact, expressions such as "first" and "second" can be used interchangeably. For example, without departing from the scope of the present disclosure, the first information may also be referred to as second information, and similarly, the second information may also be referred to as first information.

It can be further understood that, unless otherwise specified, "connected" includes a direct connection between the two without other components, and also includes an indirect connection between the two with other elements.

It can be further understood that although the operations in the embodiments of the present disclosure are described in a specific order in the drawings, they should not be understood as requiring these operations to be performed in the specific order shown or in a serial order, or requiring all the operations shown to be performed to get the desired result. In certain circumstances, multitasking and parallel processing may be advantageous.

Those skilled in the art will easily think of other embodiments of the present disclosure after considering the specification and practicing the invention disclosed herein. This application is intended to cover any variations, uses, or adaptive changes of the present disclosure. These variations, uses, or adaptive changes follow the general principles of the present disclosure and include common knowledge or conventional technical means in the technical field that are not disclosed in the present disclosure.. The description and the embodiments are to be regarded as exemplary only, and the scope of the present disclosure is pointed out by the following claims.

It should be understood that the present disclosure is not limited to the precise structure that has been described above and shown in the drawings, and various modifications and changes can be made without departing from its scope. The scope of the present disclosure is only limited by the appended claims.

## Claims

1. A screen wake-up method, which is applied to a terminal comprising a light sensor, an acceleration sensor, a main screen on a front side of the terminal, and an auxiliary screen on a reverse side of the terminal, and the screen wake-up method comprising:
in response to detecting two consecutive back tapping operations, and a time interval between occurrences of the two consecutive back tapping operations is less than a second time interval threshold, determining (S31) that a double-tap wake-up operation is detected;
in response to detecting the double-tap wake-up operation, determining whether ambient light intensity detected by the light sensor is greater than or equal to an ambient light intensity threshold;
when the ambient light intensity detected by the light sensor is greater than or equal to the ambient light intensity threshold, determining that the detected double-tap wake-up operation is not falsely triggered and a screen wake-up operation is performed on the terminal;
in response to determining a user performing the screen wake-up operation on the terminal, determining (S11, S41, S51) a first screen among the main screen and the auxiliary screen; and
waking up (S12, S42, S52) the first screen while keeping other screens except for the first screen among the main screen and the auxiliary screen in a non-wake-up state,
**characterized in that**, the determining the first screen among the main screen and the auxiliary screen comprises:
determining a screen opposite to a direction of an acceleration generated by the back tapping operations detected by the acceleration sensor as the first screen.

2. The screen wake-up method according to claim 1, wherein after the first screen is woken up, the screen wake-up method further comprises:
in response to that a running instruction is not detected within a first time threshold, adjusting (S43) the first screen to the non-wake-up state after the first time threshold is passed.

3. The screen wake-up method according to claim 1, wherein after the first screen is woken up, the screen wake-up method further comprises:
in response to performing a face recognition verification, turning on (S53) a camera on the same side as the first screen to perform a face recognition.

4. A screen wake-up apparatus, which is applied to a terminal comprising an acceleration sensor, a main screen on a front side of the terminal, and an auxiliary screen on a reverse side of the terminal, and the screen wake-up apparatus comprising:
a determining unit (101) comprising a light sensor, configured to:
in response to detecting two consecutive back tapping operations, and a time interval between occurrences of the two consecutive back tapping operations is less than a second time interval threshold, determine that a double-tap wake-up operation is detected;
in response to detecting the double-tap wake-up operation, determine whether ambient light intensity detected by the light sensor is greater than or equal to an ambient light intensity threshold;
when the ambient light intensity detected by the light sensor is greater than or equal to the ambient light intensity threshold, determine that the detected double-tap wake-up operation is not falsely triggered and a screen wake-up operation is performed on the terminal; and
in response to determining a user performing the screen wake-up operation on the terminal, determine a first screen among the main screen and the auxiliary screen; and
a waking-up unit (102) configured to wake up the first screen and keep other screens except for the first screen among the main screen and the auxiliary screen in a non-wake-up state,
**characterized in that**, the determining unit is configured to determine the first screen among the main screen and the auxiliary screen in following manner:
determining a screen opposite to a direction of an acceleration generated by the back tapping operations detected by the acceleration sensor as the first screen.

5. A storage medium having instructions stored thereon to cause the screen wake-up apparatus of claim 4 to execute the steps of the screen wake-up method described in any one of claims 1 to 3.

## Patentansprüche

1. Bildschirmaufweckverfahren, das bei einem Endgerät angewendet wird, das einen Lichtsensor, einen Beschleunigungssensor, einen Hauptbildschirm auf einer Vorderseite des Endgeräts, und einen Hilfsbildschirm auf einer Rückseite des Endgeräts aufweist, und wobei das Bildschirmaufweckverfahren umfasst:
als Reaktion auf das Detektieren von zwei konsekutiven Auf-Rückseite-Tippen-Vorgängen und dass ein Zeitintervall zwischen Vorkommnissen von zwei konsekutiven Auf-Rückseite-Tippen-Vorgängen kleiner ist als ein zweiter Zeitintervallschwellenwert, Bestimmen (S31), dass ein Doppeltipp-Aufweckvorgang detektiert wird;
als Reaktion auf das Detektieren des Doppeltipp-Aufweckvorgangs, Bestimmen, ob eine vom Lichtsensor detektierte Umgebungslichtintensität größer als ein oder gleich einem Umgebungslichtintensitätsschwellenwert ist;
wenn die von dem Lichtsensor detektierte Umgebungslichtintensität größer als ein oder gleich einem Umgebungslichtintensitätsschwellenwert ist, Bestimmen, dass der detektierte Doppeltipp-Aufweckvorgang nicht fälschlicherweise ausgelöst wird und ein Bildschirmaufweckvorgang an dem Endgerät durchgeführt wird,
als Reaktion auf das Bestimmen eines Nutzers, der den Bildschirmaufweckvorgang an dem Endgerät durchführt, Bestimmen (S11, S41, S51) eines ersten Bildschirms aus dem Hauptbildschirm und dem Hilfsbildschirm; und
Aufwecken (S12, S42, S52) des ersten Bildschirms, während andere Bildschirme mit Ausnahme des ersten Bildschirms aus dem Hauptbildschirm und dem Hilfsbildschirm in einem Nicht-Aufweckzustand beibehalten werden,
**dadurch gekennzeichnet, dass** das Bestimmen des ersten Bildschirms aus dem Hauptbildschirm und dem Hilfsbildschirm umfasst:
Bestimmen eines Bildschirms entgegengesetzt zu einer Richtung einer Beschleunigung, die durch die Auf-Rückseite-Tippen-Vorgänge erzeugt wird, wobei der Bildschirm von dem Beschleunigungssensor als erster Bildschirm detektiert wird.

2. Bildschirmaufweckverfahren nach Anspruch 1, wobei nach dem Aufwecken des ersten Bildschirms das Bildschirmaufweckverfahren ferner umfasst:
als Reaktion darauf, dass eine laufende Anweisung nicht innerhalb eines ersten Zeitschwellenwerts detektiert wird, Einstellen (S43) des ersten Bildschirms in den Nicht-Aufweckzustand, nachdem der ersten Zeitschwellenwert überschritten wurde.

3. Bildschirmaufweckverfahren nach Anspruch 1, wobei nach dem Aufwecken des ersten Bildschirms das Bildschirmaufweckverfahren ferner umfasst:
als Reaktion auf das Durchführen einer Gesichtserkennungsverifikation, Einschalten (S53) einer Kamera auf derselben Seite wie der erste Bildschirm, um eine Gesichtserkennung durchzuführen.

4. Bildschirmaufweckvorrichtung, die bei einem Endgerät angewendet wird, das einen Beschleunigungssensor, einen Hauptbildschirm auf einer Vorderseite des Endgeräts, und einen Hilfsbildschirm auf einer Rückseite des Endgeräts aufweist, wobei die Bildschirmaufweckvorrichtung aufweist:
eine Bestimmungseinheit (101), die einen Lichtsensor aufweist, der für Folgendes ausgebildet ist:
als Reaktion auf das Detektieren von zwei konsekutiven Auf-Rückseite-Tippen-Vorgängen und dass ein Zeitintervall zwischen Vorkommnissen der beiden konsekutiven Auf-Rückseite-Tippen-Vorgängen kleiner als ein zweiter Zeitintervallschwellenwert ist, Bestimmen, dass eine Doppeltipp-Aufweckvorgang detektiert wird;
als Reaktion auf das Detektieren des Doppeltipp-Aufweckvorgangs, Bestimmen, ob eine vom Lichtsensor detektierte Umgebungslichtintensität größer als ein oder gleich einem Umgebungslichtintensitätsschwellenwert ist;
wenn die von dem Lichtsensor detektierte Umgebungslichtintensität größer als ein oder gleich einem Umgebungslichtintensitätsschwellenwert ist, Bestimmen, dass der detektierte Doppeltipp-Aufweckvorgang nicht fälschlicherweise ausgelöst wird und ein Bildschirmaufweckvorgang an dem Endgerät durchgeführt wird; und
als Reaktion auf das Bestimmen eines Nutzers, der den Bildschirmaufweckvorgang an dem Endgerät durchführt, Bestimmen eines ersten Bildschirms aus dem Hauptbildschirm und dem Hilfsbildschirm; und
eine Aufweckeinheit (102), die dazu ausgebildet ist, den ersten Bildschirm aufzuwecken und andere Bildschirme mit Ausnahme des ersten Bildschirms aus dem Hauptbildschirm und dem Hilfsbildschirm in einem Nicht-Aufweckzustand beizubehalten,
**dadurch gekennzeichnet, dass** die Bestimmungseinheit dazu ausgebildet ist, den ersten Bildschirm aus dem Hauptbildschirm und dem Hilfsbildschirm auf folgende Weise zu bestimmen:
Bestimmen eines Bildschirms entgegengesetzt zu einer Richtung einer Beschleunigung, die durch die Auf-Rückseite-Tippen-Vorgänge erzeugt wird, wobei der Bildschirm von dem Beschleunigungssensor als erster Bildschirm detektiert wird.

5. Speichermedium, auf dem Anweisungen gespeichert sind, um zu bewirken, dass die Bildschirmaufweckvorrichtung nach Anspruch 4 die Schritte des in einem der Ansprüche 1 bis 3 beschriebenen Bildschirmaufweckverfahrens ausführt.

## Revendications

1. Procédé d'activation d'écran, qui est appliqué à un terminal comprenant un capteur de lumière, un capteur d'accélération, un écran principal situé d'un côté avant du terminal, et un écran auxiliaire situé d'un côté arrière du terminal, et le procédé d'activation d'écran comprenant les étapes consistant à :
en réponse à la détection de deux opérations de tapotement arrière consécutives, et au fait qu'un intervalle de temps entre des occurrences des deux opérations de tapotement arrière consécutives est inférieur à un second seuil d'intervalle de temps, déterminer (S31) qu'une opération d'activation par double tapotement a été détectée ;
en réponse à la détection de l'opération d'activation par double tapotement, déterminer si une intensité de lumière ambiante détectée par le capteur de lumière est supérieure ou égale à un seuil d'intensité de lumière ambiante ;
lorsque l'intensité de lumière ambiante détectée par le capteur de lumière est supérieure ou égale au seuil d'intensité de lumière ambiante, déterminer que l'opération d'activation par double tapotement détectée n'a pas été déclenchée par erreur et qu'une opération d'activation d'écran a été effectuée sur le terminal ;
en réponse à la détermination du fait qu'un utilisateur effectue l'opération d'activation d'écran sur le terminal, déterminer (S11, S41, S51) un premier écran entre l'écran principal et l'écran auxiliaire ; et
activer (S12, S42, S52) le premier écran tout en maintenant d'autres écrans, à l'exception du premier écran entre l'écran principal et l'écran auxiliaire, dans un état non activé,
**caractérisé en ce que** l'étape de détermination du premier écran entre l'écran principal et l'écran auxiliaire consiste à :
déterminer un écran opposé à un sens d'une accélération générée par les opérations de tapotement arrière détectées par le capteur d'accélération en tant que le premier écran.

2. Procédé d'activation d'écran selon la revendication 1, dans lequel, après l'activation du premier écran, le procédé d'activation d'écran comprend en outre l'étape consistant à :
en réponse au fait qu'une instruction d'exécution n'a pas été détectée sur un premier intervalle de temps, régler (S43) le premier écran à l'état non activé après l'écoulement du premier seuil de temps.

3. Procédé d'activation d'écran selon la revendication 1, dans lequel, après l'activation du premier écran, le procédé d'activation d'écran comprend en outre l'étape consistant à :
en réponse à l'exécution d'une vérification de reconnaissance faciale, activer (S53) une caméra située du même côté que le premier écran pour exécuter une reconnaissance faciale.

4. Appareil d'activation d'écran, qui est appliqué à un terminal comprenant un capteur d'accélération, un écran principal situé d'un côté avant du terminal, et un écran auxiliaire situé d'un côté arrière du terminal, et l'appareil d'activation d'écran comprenant :
une unité de détermination (101) comprenant un capteur de lumière, configurée pour :
en réponse à une détection de deux opérations de tapotement arrière consécutives, et au fait qu'un intervalle de temps entre des occurrences des deux opérations de tapotement arrière consécutives est inférieur à un second seuil d'intervalle de temps, déterminer qu'une opération d'activation par double tapotement a été détectée ;
en réponse à la détection de l'opération d'activation par double tapotement, déterminer si une intensité de lumière ambiante détectée par le capteur de lumière est supérieure ou égale à un seuil d'intensité de lumière ambiante ;
lorsque l'intensité de lumière ambiante détectée par le capteur de lumière est supérieure ou égale au seuil d'intensité de lumière ambiante, déterminer que l'opération d'activation par double tapotement détectée n'a pas été déclenchée par erreur et qu'une opération d'activation d'écran a été effectuée sur le terminal ; et
en réponse à la détermination du fait qu'un utilisateur effectue l'opération d'activation d'écran sur le terminal, déterminer un premier écran entre l'écran principal et l'écran auxiliaire ; et
une unité d'activation (102) configurée pour activer le premier écran et pour maintenir d'autres écrans, à l'exception du premier écran entre l'écran principal et l'écran auxiliaire, dans un état non activé,
**caractérisé en ce que** l'unité de détermination est configurée pour déterminer le premier écran entre l'écran principal et l'écran auxiliaire de la manière suivante :
déterminer un écran opposé à un sens d'une accélération générée par les opérations de tapotement arrière détectées par le capteur d'accélération en tant que le premier écran.

5. Support de stockage comportant des instructions mémorisées en son sein pour amener l'appareil d'activation d'écran selon la revendication 4 à exécuter les étapes du procédé d'activation d'écran selon l'une quelconque des revendications 1 à 3.
